# EUROPEAN PATENT SPECIFICATION

(11) **EP 3 608 567 B1**
(45) Date of publication and mention of the grant of the patent: **22.07.2026**
(21) Application number: 19188025.1
(22) Date of filing: 24.07.2019
(51) Int. Cl.: F16K 11/078, F16K 27/04

(54) **DISC VALVE FOR A WATER FAUCET, WATER FAUCET AND METHOD TO COMPENSATE MANUFACTURING TOLERANCES IN A DISC VALVE**
SCHEIBENVENTIL FÜR EINEN WASSERHAHN, WASSERHAHN UND VERFAHREN ZUM AUSGLEICH VON FERTIGUNGSTOLERANZEN IN EINEM SCHEIBENVENTIL
OBTURATEUR À DISQUE POUR ROBINET D'EAU, ROBINET D'EAU ET PROCÉDÉ POUR COMPENSER LES TOLÉRANCES DE FABRICATION DANS UN OBTURATEUR À DISQUE

(30) Priority: 10.08.2018 DE 102018119540
(43) Date of publication of application: 12.02.2020
(73) Proprietor: ORAS OY, 26100 Rauma (FI)
(72) Inventor: Assenmacher, Bernd, 70567 Stuttgart (DE)
(74) Representative: Ostertag & Partner Patentanwälte mbB

(56) References cited:
- EP-A1- 0 641 963
- EP-A2- 0 199 960
- EP-B1- 3 358 231
- US-A- 3 794 074
- US-A- 4 157 099
- US-A- 4 995 419
- US-A1- 2014 326 342

## Description

### BACKGROUND OF THE INVENTION

### 1. Field of the Invention

The present invention relates to a disc valve and a water faucet used to control the water dosage and/or temperature of the water dispensed from the water faucet.

The invention further relates to a method to compensate manufacturing tolerances in a disc valve.

### 2. Description of the Prior Art

Single lever mixers are commonly used as a comfortable means of controlling the volume flow rate and/or the temperature of water dispensed from a water faucet. The release of water from the water faucet is controlled by a valve arranged within the housing of the water faucet. In such a valve a valve element is commonly pressed against a rubber seal of a valve seat to prevent water leakage.

Due to the heavy usage of industrial and household water faucets and the accompanied friction and compression against the rubber seal, the rubber seals become worn and require frequent replacement.

Therefore, in recent years the use of disc valves such as the disc valve disclosed in EP 1 039 191 B1 for single lever mixers has become widespread.

A disc valve typically comprises two ceramic discs and an engaging disc arranged in a stack within a valve housing as a valve means. The ceramic discs are pressed against each other and comprise water channels at different lateral positions. To actuate the valve, the two discs are displaced relative to one another in order to bring the water channels of the two valve discs more or less in superposition. Depending on the superposition more or less cold and/or hot water will be dispensed.

The movement of at least one of the two valve discs is controlled via a valve actuating member engaged in the engaging disc, which engaging disc then acts on one of the valve discs. The valve actuating member is pivoted about a pivot point when actuating the valve. A faucet handle used to operate the water faucet is connected to the valve actuating member.

The highly planar surfaces of the ceramic discs create a sealing effect between the two ceramic discs, thereby eliminating the need for a rubber seal. Furthermore, ceramic is highly durable and unsusceptible to wear through friction, mineral deposits and corrosion. The service life of such disc valves is consequently vastly extended.

However, there are disadvantages to disc valves. The lack of rubber seals requires very precise manufacturing, as any manufacturing tolerances of the valve elements cannot be compensated by the compression of a rubber seal.

Therefore, EP 1 039 191 B1 discloses to machine the valve housing to a predetermined measurement to compensate for any tolerances the housing may have. This ensures that each valve housing has the same dimension, thereby avoiding a deformation of the housing when mounting the valve housing within a water faucet.

However, machining the housing is time-consuming.

Further sanitary fitting valves are known from the following documents:
US 3,794,074 A shows a disc valve, wherein a mounting member overlies a moveable valve member. The mounting member comprises lugs extending sideways of the moveable valve member. By working the height of the lugs a float of the moveable valve member is adjusted.

EP 0 641 963 A1 shows a single lever mixing valve which comprises a lever having a cross shaped guiding head at its valve disc end. The cross shaped guiding head improves the interaction between the lever and the moveable valve disc with respect to play during sliding and rotating movements of the valve disc.

US 4,995,419 A shows a mixing valve cartridge with a housing and a bottom plate. The bottom plate comprises outwardly projecting barbs in order to securely clip the bottom plate into the housing.

US 2014/0326342 A1 shows a mixing valve cartridge which is mounted into a sanitary fitting by means of a fastening ring placed on top of the mixing valve cartridge. Depending on how tight the fastening ring is screwed into the sanitary fitting the height of a lever pivoting point is varied together with the housing of the cartridge.

US 4,157,099 A shows a sanitary mixing valve with a control valve disc having a water flow channel. In the water flow channel a screen basket is inserted which gets compressed only slightly during mounting of the valve such that a free flow passageway with a constant cross section is provided independent of the height of the control valve disc.

EP 0 199 960 A2 shows a sanitary fitting with a lever head housing which comprises a valve stack of a single lever mixing valve. In order to avoid a housing gap caused by different heights of the valve stack the lever head housing may slide with respect to a housing of the sanitary fitting.

EP 3 358 231 A1 shows a disc valve with a housing for a disc stack. In order to provide a given play for the tolerance-dependant disc stack the housing comprises axial stops for a cover part. After measuring the height of the disc stack these axial stops are shortened to a certain axial length. Thereby, the distance between the cover part and the bottom of the disc stack varies with the height of the disc stack such that the play of the stack is fixed.

### SUMMARY OF THE INVENTION

It is therefore an object of the present invention to provide a disc valve which is improved with respect to the compensation of manufacturing tolerances, in particular which doesn't need machining of the housing.

This object is achieved by a disc valve for controlling water dosage and/or water temperature of a water faucet, comprising:
a) a disc valve housing having a base surface b;
b) a disc stack arranged in the disc valve housing, wherein the disc stack comprises two valve discs displaceable to one another as valve means;
c) a valve actuating member engaged with the disc stack by means of which one of the two valve discs can be displaced,
d) a receiving element having a height g and being configured to receive the valve actuating member such that a pivot point about which the valve actuating member can pivot is provided,

According to the invention, a predetermined distance d between the pivot point and the base surface b is provided regardless of manufacturing tolerances by adjusting a tolerance compensation height h provided substantially within the disc valve housing.

The inventor has recognized that the tolerance compensation of prior art has no effect on tolerances of parts, such as the height of the disc stack, determining the position of the valve actuating member. Therefore, the position of the valve actuating member relative to the base surfaces b varies. This in turn has an influence on the position of the valve actuating member relative to external faucet parts, such as the faucet body.

As a result, the faucet handle height also varies, which requires large clearances between external parts of the water faucet, such as a bezel covering the disc valve, and the faucet handle to compensate for varying faucet handle heights caused by manufacturing tolerances and to avoid collision of these parts when moving the faucet handle. This causes large gaps to be visible after assembly of the water faucet.

The inventor therefore came to the conclusion, that a tolerance compensation height h within the housing of the disc valve specific for each individual disc valve respectively disc stack could be provided in order to compensate for manufacturing tolerances.

By compensating for manufacturing tolerances within the disc valve housing itself the distance d between the base surface b of the disc valve housing and the pivot point is held consistent to a predetermined value from one disc valve to another during production. By keeping the distance d consistent the relative position of the valve actuating member, and of the faucet handle attached thereon, to the faucet body is thus also consistent in a large production batch.

The compensation of tolerances by means of the tolerance compensation height h eliminates the need for larger clearances. The reduction of gaps seen from the outside after installation of the water faucet lead to a more aesthetically appealing water faucet.

Furthermore, the demand for low tolerances through precise manufacturing is reduced as larger tolerances of manufactured parts can be compensated for by the tolerance compensation height h.

Furthermore, when mounting the disc valve to a flange or shoulder of a faucet body the force acting upon the valve discs is consistent and independent of the mounting torque due to the consistent distance d. This reduces the risk of water leakage while maintaining ease of motion of the water faucet handle.

Preferably, the disc valve is a cartridge disc valve. Cartridge disc valves can be manufactured such, that according to the invention the individual cartridges in a large production batch have a consistent predetermined distance d.

The tolerance compensation height h is preferably provided by one or more parts of the disc valve which are arranged in the disc valve housing. The parts providing the tolerance compensation height h are preferably one or more of the receiving element, a part of the disc stack and an additional part arranged in the disc valve housing preferably superimposed on the disc stack. The additional part can however also be arranged below the disc stack.

The base surface b of the disc valve housing, which acts as a reference point for defining the distance d, may be realized at the bottom of the disc valve housing. However, also an outer shoulder somewhere along the disc valve housing may be construed as the base surface b. In particular, in case of a cartridge disc valve the cartridge may have such a shoulder which is associated with a complementary stop shoulder of the water faucet, in which the cartridge is mounted. Thereby, the height of the actuating member is consistently predetermined with respect to the water faucet regardless of any sealings provided between the cartridge and the water faucet.

In one embodiment the tolerance compensation height h is provided by a tolerance compensation element.

The height h provided by the tolerance compensation element may be defined by providing a set of tolerance compensation elements having different thicknesses and by choosing one or more tolerance compensation elements with the right thickness for assembly of an individual valve. Alternatively or additionally, the tolerance compensation element may also provide the height h by means to vary the height h of a single tolerance compensation element.

The height of each tolerance compensation element can be adjusted by manufacturing the tolerance compensation element to a predetermined height, such as in a flexible injection moulding process, or by subsequently adjusting the height of the tolerance compensation element after manufacturing, such as melting or machining the tolerance compensation element down to a predetermined height.

In one embodiment a recess is formed in the disc stack or the receiving element and an insertion element is formed on the tolerance compensation element, the insertion element being inserted in the recess to provide the tolerance compensation height h.

This allows for easy and accurate assembly and disassembly of the tolerance compensation element in the disc valve and holds the tolerance compensation element in place, thereby reducing relative movement of the tolerance compensation element and the disc stack or the receiving element.

Alternatively, the tolerance compensation element can be glued onto the disc stack or the receiving element or held in place by the use of a clip.

Preferably the insertion element is a ring-shaped tongue and the recess is a ring-shaped groove. This creates a large contact surface between the tolerance compensation elements and the recess. Furthermore, any shear forces acting between the tolerance compensation element and the surface of the recess are evenly spreaded.

Alternatively, a semi-ring shaped tongue and a semi-ring shaped groove can be used. If only a sector of a ring is used movement in circumferential direction of the insertion element relative to the disc stack or to the receiving element is reduced.

In one embodiment the insertion element is insertable into the recess with variable insertion depths to vary the tolerance compensation height h provided by the tolerance compensation element.

By varying the insertion depths of the insertion element in the recess the height h used to compensate for tolerances within the disc valve can easily be changed over a wide range of heights without the need for additional machining of the valve disc parts. Therefore, tolerances that scatter from one produced water faucet to the next can be compensated for with a single tolerance compensation element.

Alternatively the tolerance compensation element can be machined to achieve different heights h.

In one embodiment the insertion element and the recess are firmly connected.

Thereby, the height h provided by the tolerance compensation element is fixed once it is adjusted for a disc valve. Accordingly, a given slackness of the disc valve will be kept also after assembly of the tolerance compensation element. This reduces relative movement between the tolerance compensation element, the disc stack and the receiving element even further. Friction and wear are thereby reduced, increasing the lifetime of the tolerance compensation element, the disc stack and the receiving element. A firm connection could for example be established by using a preferably water resistant adhesive.

In one embodiment the insertion element and the recess form a press fit.

This allows for a high degree of fixation between the tolerance compensation element and disc stack or the receiving element without a further fixation step or in preparation of a further fixation step. Advantageously, a press-fit is a non-permanent connection, so that the insertion element and the recess can be disconnected again. This allows for easy replacement of worn or broken parts without having to replace the entire assembly.

In one embodiment the insertion element and the recess are welded together.

A material bond provides a permanent connection. Preferably, the insertion element and the recess are welded together by ultrasonic welding. This allows for a firm bond between the insertion element and the recess while maintaining accurate positioning of the insertion element in the recess. Ultrasonic welding also does not require large amounts of heat to form a connection, which avoids any damage caused by deformation of parts by means of heat.

Alternatively, the tolerance compensation element itself can be melted to the disc stack or the receiving element. The melting can occur before assembly, such as by heating the tolerance compensation element, the disc stack or the receiving element.

In one embodiment the disc stack further comprises an engaging disc having a thickness t connected to one of the two valve discs, the valve actuating member being engaged with the engaging disc.

Alternatively, the valve actuating member can engage with one of the valve discs and thereby displace one of the valve discs directly. However, typically the valve discs are made of a hard material, such as ceramic, in order to reduce the wear on the valve discs during frequent use of the water faucet. The use of a separate engaging disc allows more freedom in the choice of material and in the structural design of the engaging disc. Therefore, less expensive material, such as plastic, can be used to manufacture the engaging disc.

In one embodiment the tolerance compensation height h is provided by varying thickness t of the engaging disc.

This provides the tolerance compensation height h without the need for additional parts within the disc valve housing or additional manufacturing steps, thereby providing a cost efficient means of compensating manufacturing tolerances in a disc valve.

In one embodiment the tolerance compensation height h is provided by at least one projection formed on the engaging disc extending beyond the thickness t of the engaging disc.

The projection formed on the engaging disc can be machined or melted to a determined height in order to vary the tolerance compensation height h provided. This allows high flexibility in providing a wide range of tolerance compensation heights h depending on the manufacturing tolerances. In turn, the precision and variability of the predetermined distance d is enhanced. The projection can be a rib extending along a surface of the engaging disc. However smaller projections in different shapes, such as circular projections, are also possible.

In one embodiment the tolerance compensation height h is provided by varying the height g of the receiving element.

The receiving element can thereby be machined or each receiving element can be manufactured to a variable predetermined height g depending on the manufacturing tolerances of each individual disc valve.

The invention is not limited to one means of providing the tolerance compensation height h. A combination of any of the described means is also possible.

In accordance with the second aspect of the present invention the object is also achieved by providing a water faucet for dispensing water comprising a faucet body, a hot water inlet and/or cold water inlet for introducing water into the water faucet, a water outlet for dispensing water from the water faucet and a disc valve according to any one of the preceding claims for controlling water dosage and/or water temperature of the dispensed water.

Such a water faucet may show an aesthetically more appealing design.

The object of the invention is also achieved by providing a method of compensating manufacturing tolerances in a disc valve with the following steps:
a) arranging a disc stack in a disc valve housing, wherein the disc valve housing has a base surface b and wherein the disc stack comprises two valve discs displaceable to one another as valve means;
b) assembling a valve actuating member in a receiving element, wherein the receiving element has a height g and is configured such that a pivot point about which the valve actuating member can pivot is provided;
c) arranging the assembled valve actuating member and the receiving element on the disc stack such that the valve actuating member engages with the disc stack, by means of which one of the two valve discs can be displaced;
d) providing a tolerance compensation height h substantially within the disc valve housing such that a predetermined distance d between the pivot point and the base surface b is provided regardless of manufacturing tolerances.

In one embodiment the tolerance compensation height h is provided by arranging a tolerance compensation element substantially in the disc valve housing.

In one embodiment the tolerance compensation height h is provided by inserting an insertion element formed on the tolerance compensation element into a recess formed in the disc stack or the receiving element with variable insertion depths i.

The advantages and preferred embodiments already described with regards to the disc valve apply to the inventive method accordingly.

### SUMMARY OF THE INVENTION

### BRIEF DESCRIPTION OF THE DRAWINGS

- Figure 1: shows a water faucet with a disc valve in a first embodiment according to the invention in a sectional view;
- Figure 2: shows the disc valve of figure 1 in a sectional view;
- Figure 3: shows an enlarged view of the tolerance compensation element of figures 1 and 2;
- Figure 4: shows a second embodiment of the disc valve according to the invention in a sectional view;
- Figure 5: shows an enlarged view of projections formed on the engaging disc of figure 4;
- Figure 6: shows a third embodiment of the disc valve according to the invention in a sectional view.

### DETAILED DESCRIPTION OF PREFERRED EMBODIMENTS

### 1. First embodiment

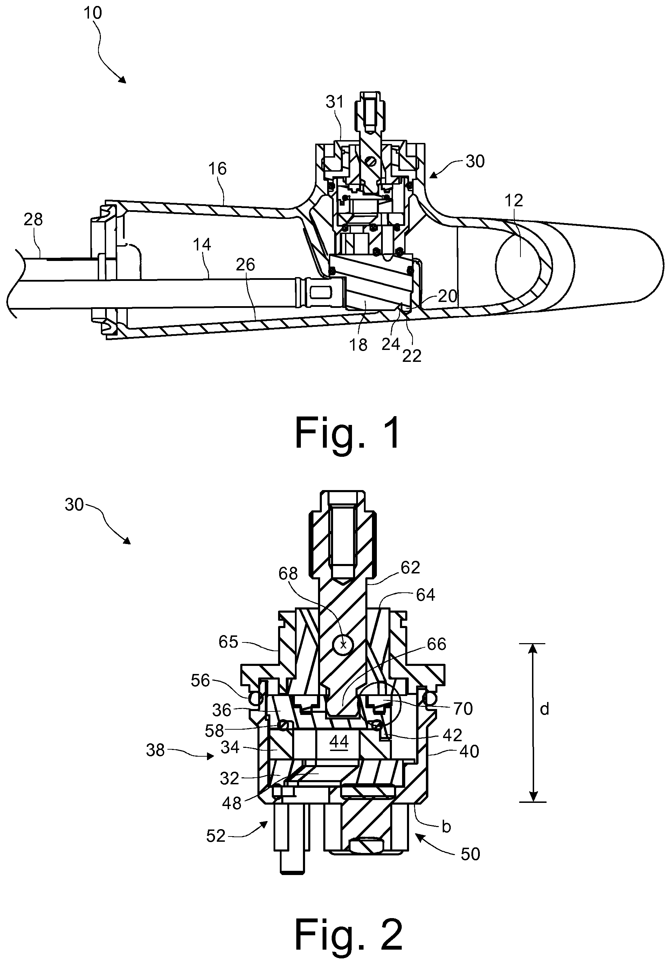

Figure 1 shows a water faucet 10 used to dispense water through a water outlet 12. A cold water inlet 14 is fed through a faucet body 16 and connected to a base unit 18. The base unit 18 is connected to the faucet body 16 by means of a fixation stub 20 formed on the base unit 18. A thereto corresponding indention 22 and a nose-piece 24 are formed on the inner surface 26 of the faucet body 16.

The base unit 18 and the faucet body 16 can alternatively be cast as a single component.

The water faucet 10 also comprises a warm water inlet, which is not displayed in figure 1, because it is located behind the cold water inlet 14 in relation to the drawing plane of fig-ure 1. Alternatively it can also be located in front of the cold water inlet 14.

The water faucet 10 is fixed in place by means of a mounting rod 28 connected to the faucet body 16.

The water dispensed from the water faucet 10 through the water outlet 12 is dosed and tempered by a disc valve 30, which in the present embodiment is realized as a cartridge disc valve.

A nut 31 is screwed into threading provided by the faucet body 16 to secure the disc valve 30 in the faucet body 16. The nut 31 also produces a force on the disc valve 30 to avoid water leakages within the disc valve 30.

Figure 2 shows an enlarged view of the disc valve 30. The disc valve 30 comprises a stationary disc 32 and a moving disc 34 superimposed on the stationary disc 32. An engaging disc 36 is superimposed on the moving disc 34. The stationary disc 32, the moving disc 34 and the engaging disc 36 form a disc stack 38 arranged in a valve housing 40.

The moving disc 34 and the stationary disc 32 are made of a hard material, such as ceramic, to reduce wear of both discs. Engaging teeth 42 are formed on the engaging disc 36, by means of which the engaging disc 36 is connected to the moving disc 34 in a form fit manner.

The moving disc 34 comprises a mixing chamber 44 for mixing the hot water and cold water introduced into the disc valve 30. The stationary disc 32 comprises a cold water inlet channel and a warm water inlet channel not displayed in figure 1 and an outlet channel 48.

The disc valve housing 40 comprises an inlet 50, through which warm water and/or cold water is led into the disc stack 38. The valve housing 40 also has a base surface b facing the base unit 18. The valve housing 40 further comprises an outlet 52 through which water coming from the mixing chamber 44 can flow before entering the water outlet 12.

The disc valve housing 40 is sealed against the faucet body 16 by seal 56. The engaging disc 36 is sealed against the moving disc 34 by seal 58.

A valve actuating member 62 received in a receiving element 64 is used to control the disc valve 30. The receiving element 64 is encompassed by a cover 65, which receives the forces causing by the nut 31 screwed into threading provided by the faucet body 16. There is a gap between the top faces of the side walls of the disc valve housing 40 and the cover 65 to ensure the forces created by the nut 31 are not exerted directly onto the disc valve housing 40.

The valve actuating member 62 comprises an engagement end 66 engaged in the engaging disc 36. The valve actuating member 62 features a pivot point 68 about which the valve actuating member 62 can be pivoted to control the dosage of water exiting the water faucet 10 through the water outlet 12.

A distance d extends from the base surface b of the valve housing 40 to the pivot point 68 of the valve actuating member 62.

A faucet handle, which is not shown in figure 1, is connected to the valve actuating member 62. The faucet handle is used to operate the water faucet 10.

The disc valve 30 further comprises a tolerance compensation element 70. The tolerance compensation element 70 is a ring-shaped bar.

By pivoting the valve actuating member about the pivot point 68 and/or by rotating the valve actuating member 62 about its longitudinal axis the engaging disc 36 and the thereto connected moving disc 34 are displaced relative to the stationary disc 32. By moving the moving disc 34 and thereby overlapping at least a portion of the cold water inlet channel and the mixing chamber 44 water is introduced into the mixing chamber 44. If a portion of the mixing chamber 44 also overlaps the outlet channel 48 then water is fed from the mixing chamber 44 into the outlet channel 48 and into the outlet 52. From there the water is then dispensed through the water outlet 12. The degree of overlapping of the mixing chamber 44 with at least one of the cold water inlet channel or the warm water inlet channel and the outlet channel 48 determines the volume flow, and therefore the dosage, of water being dispensed from the water faucet 10. The mixing chamber 44 overlaps at least to an extent with the outlet channel 48 in any operational situation in order to avoid a short circuit between the cold water inlet channel and the warm water inlet channel.

To adjust the water temperature of the water dispensed from the water faucet 10 the mixing chamber 44 additionally overlaps with a portion of the warm water inlet channel. The ratio of the overlapping of the mixing chamber 44 with the cold water inlet channel to the overlapping of the mixing chamber 44 with the cold water inlet channel determines the ratio of cold water to warm water being dispensed from the water faucet, thus affecting the water temperature.

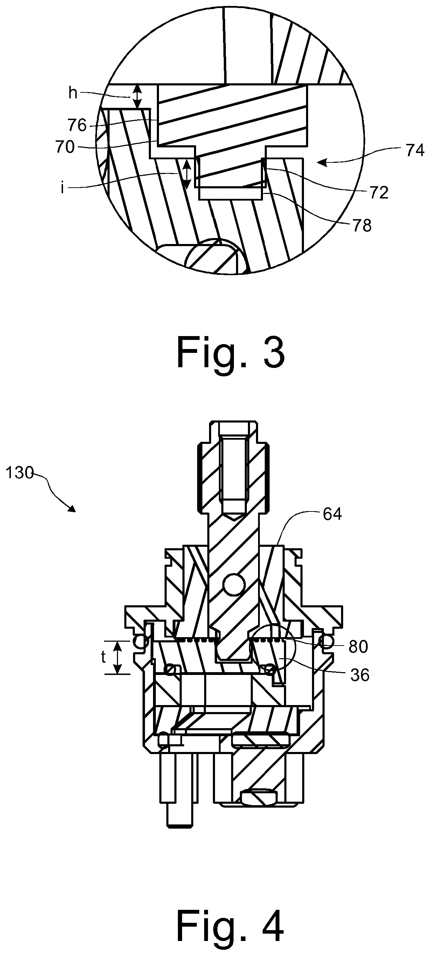

Figure 3 shows an enlarged view of the tolerance compensation element 70 of figure 2.

An insertion element 72 is formed on the tolerance compensation element 70. A recess 74 is formed in the engaging disc 36 and dimensioned to at least partially receive the insertion element 72.

The recess 74 has a stepped shape and comprises an upper portion 76 dimensioned to partially receive the tolerance compensation element 70 and a lower portion 78 dimensioned to partially receive the insertion element 72. The insertion element 72 is slightly wider than the lower portion 78 of the recess 74 to allow the insertion element 72 to be press-fitted into the lower portion 78 of the recess 74.

The tolerance compensation element 70 provides a tolerance compensation height h located outside of the recess 74.

The tolerance compensation height h provided by the tolerance compensation element 70 is variable. By varying the height h provided by the tolerance compensation element 70 the tolerances occurring during manufacturing, in particular of the valve housing 40, the stationary disc 32 and the moving disc 30 as well as the engaging disc 36, are compensated when assembling the disc valve to ensure a consistent distance d between the individual disc valves 30.

The height h is varied by varying an insertion depth i of the insertion element 72 in the lower portion 78 of the recess 74 depending on the requirement of the individual valve at hand.To increase the height h the insertion element 72 is inserted into the lower portion 78 of the recess 74 at a smaller insertion depth i. In this case the tolerance compensation element 70 extends farther beyond the engaging disc 36. To decrease the height h the insertion element 72 is inserted into the lower portion 78 of the recess 74 at a greater insertion depth i. In this case, the portion of the tolerance compensation element 70 extending beyond the engaging disc 36 is reduced.

### 2. Second embodiment

Figure 4 shows a disc valve 130 in a second embodiment. The disc valve 130 shown is fig-ure 4 is substantially the same as the disc valve 30 shown in figures 1, 2 and 3 with the exception of the means providing the tolerance compensation height h.

The engaging disc 36 features projections 80 formed on its top surface. The projections 80 extend beyond the base thickness t of the engaging disc 36. The receiving element 64 thereby rests on the projections 80, elevated above the thickness t of the engaging disc 36 by the height of the projections 80. The tolerance compensation height h is therefore provided by the height of the projections 80.

The height of projections 80 can be adjusted in a manufacturing step. Preferably the projections 80 are melted to a predetermined height to provide a tolerance compensation height h which compensates the manufacturing tolerances of each individual disc valve 130. The projections 80 can also be machined to a predetermined height. By being able to individually adjust the height of the projections 80 the thereby provided tolerance compensation height h is highly variable so that a wide range of manufacturing tolerances can be compensated.

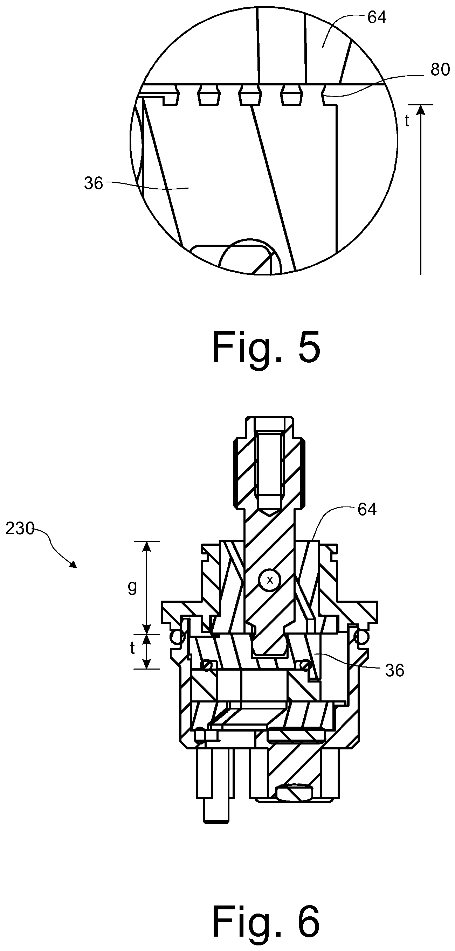

Figure 5 shows an enlarged view of the engaging disc 36 of figure 4, in particular of the projections 80 formed on the engaging disc 36.

### 3. Third embodiment

Figure 6 shows a disc valve 230 in a third embodiment. The disc valve 230 shown is figure 6 is substantially the same as the disc valves 30 and 130 shown in figures 1, 2, 3, 4 and 5 with the exception of the means providing the tolerance compensation height h.

The tolerance compensation height h is provided by adjusting the height g of the receiving element 64 and/or the thickness t of the engaging disc 36. The height g of the receiving element 64 can also be adjusted by forming projections on the receiving element 64 similar to those formed on the engaging disc 36 shown in figures 4 and 5.

However the height g of the receiving element 64 and the thickness t of the engaging disc 36 can also be varied during manufacturing by a flexible injection moulding process providing receiving elements 64 of various heights g and/or engaging disc 36 of various thicknesses t.

## Claims

1. Disc valve (30; 130; 230) for controlling water dosage and/or water temperature of a water faucet (10), comprising:
e) a disc valve housing (40) having a base surface b;
f) a disc stack (38) arranged in the disc valve housing (40), wherein the disc stack (38) comprises two valve discs (32, 34) displaceable to one another as valve means;
g) a valve actuating member (62) engaged with the disc stack (38) by means of which one of the two valve discs (32, 34) can be displaced,
h) a receiving element (64) having a height g and being configured to receive the valve actuating member (62) such that a pivot point (68) about which the valve actuating member (62) can pivot is provided,
**characterized in that**
a predetermined distance d between the pivot point (68) and the base surface b is provided regardless of manufacturing tolerances by adjusting a tolerance compensation height h provided within the disc valve housing (40).

2. Disc valve (30) according to claim 1, wherein the tolerance compensation height h is provided by a tolerance compensation element (70).

3. Disc valve (30) according to claim 2, wherein a recess (74) is formed in the disc stack (38) or the receiving element (64) and an insertion element (72) is formed on the tolerance compensation element (70), the insertion element (72) being inserted in the recess (74) to provide the tolerance compensation height h.

4. Disc valve (30) according to claim 3, wherein the insertion element (72) is insertable into the recess (74) with variable insertion depths i to vary the tolerance compensation height h provided by the tolerance compensation element (70).

5. Disc valve (30) according to one of claims 3 or 4, wherein the insertion element (72) and the recess (74) are firmly connected.

6. Disc valve (30) according to claim 5, wherein the insertion element (72) and the recess (74) form a press-fit.

7. Disc valve (30) according to one of claims 5 or 6, wherein the insertion element (72) and the recess (74) are welded together.

8. Disc valve (30; 130; 230) according to one of the previous claims, wherein the disc stack (38) further comprises an engaging disc (36) having a thickness t connected to one of the two valve discs (32, 34), the valve actuating member (62) being engaged with the engaging disc (36).

9. Disc valve (230) according to claim 8, wherein the tolerance compensation height h is provided by varying thickness t of the engaging disc (36).

10. Disc valve (130) according to claim 8, wherein the tolerance compensation height h is provided by at least one projection (80) formed on the engaging disc (36) extending beyond the thickness t of the engaging disc (36).

11. Disc valve (230) according to any of claims 1, 8 or 10, wherein the tolerance compensation height h is provided by varying the height g of the receiving element (64).

12. Water faucet (10) for dispensing water, comprising:
a) a faucet body (16);
b) a hot water inlet and/or a cold water inlet (14) for introducing water into the water faucet (10);
c) a water outlet (12) for dispensing water from the water faucet (10);
d) a disc valve (30; 130; 230) according to any of the preceding claims for controlling water dosage and/or water temperature of the dispensed water.

13. Method of compensating manufacturing tolerances in a disc valve (30; 130; 230) with the following steps:
a) arranging a disc stack (38) in a disc valve housing (40), wherein the disc valve housing (40) has a base surface b and wherein the disc stack (38) comprises two valve discs (32, 34) displaceable to one another as valve means;
b) assembling a valve actuating member (62) in a receiving element (64), wherein the receiving element (64) has a height g and is configured such that a pivot point (68) about which the valve actuating member can pivot is provided;
c) arranging the assembled valve actuating member (62) and the receiving element (64) on the disc stack (38) such that the valve actuating member (62) engages with the disc stack (38), by means of which one of the two valve discs (32, 34) can be displaced;
d) providing a tolerance compensation height h substantially within the disc valve housing (40) such that a predetermined distance d between the pivot point (68) and the base surface b is provided regardless of manufacturing tolerances.

14. Method according to claim 13, wherein the tolerance compensation height h is provided by arranging a tolerance compensation element (70) substantially in the disc valve housing (40).

15. Method according to claim 14, wherein the tolerance compensation height h is provided by inserting an insertion element (72) formed on the tolerance compensation element (70) into a recess (74) formed in the disc stack (38) or the receiving element (64) with variable insertion depths i.

## Patentansprüche

1. Scheibenventil (30; 130; 230) zum Steuern einer Wasserdosierung und/oder einer Wassertemperatur einer Wasserarmatur (10), umfassend:
a) ein Scheibenventilgehäuse (40), das eine Grundoberfläche b aufweist;
b) einen Scheibenstapel (38), der in dem Scheibenventilgehäuse (40) angeordnet ist, wobei der Scheibenstapel (38) zwei Ventilscheiben (32, 34) umfasst, die als Ventilmittel zueinander bewegbar sind;
c) ein Ventilbetätigungselement (62), das mit dem Scheibenstapel (38) in Eingriff steht, mittels dessen eine der zwei Ventilscheiben (32, 34) bewegbar ist;
d) ein Aufnahmeelement (64), das eine Höhe g aufweist und dazu eingerichtet ist, das Ventilbetätigungselement (62) derart aufzunehmen, dass ein Schwenkpunkt (68), um den sich das Ventilbetätigungselement (62) schwenken kann, bereitgestellt wird,
**dadurch gekennzeichnet, dass**
ein vorbestimmter Abstand d zwischen dem Schwenkpunkt (68) und der Grundoberfläche b durch Einstellen einer Toleranzausgleichshöhe h, die innerhalb des Scheibenventilgehäuses (40) vorgesehen ist, unabhängig von Fertigungstoleranzen bereitgestellt wird.

2. Scheibenventil (30) nach Anspruch 1, wobei die Toleranzausgleichshöhe h durch ein Toleranzausgleichselement (70) bereitgestellt wird.

3. Scheibenventil (30) nach Anspruch 2, wobei in dem Scheibenstapel (38) oder dem Aufnahmeelement (64) eine Vertiefung (74) ausgebildet ist und an dem Toleranzausgleichselement (70) ein Einführelement (72) ausgebildet ist, wobei das Einführelement (72) in die Vertiefung (74) eingeführt wird, um die Toleranzausgleichshöhe h bereitzustellen.

4. Scheibenventil (30) nach Anspruch 3, wobei das Einführelement (72) mit variablen Einführtiefen i in die Vertiefung (74) einführbar ist, um die durch das Toleranzausgleichselement (70) bereitgestellte Toleranzausgleichshöhe h zu variieren.

5. Scheibenventil (30) nach Anspruch 3 oder 4, wobei das Einführelement (72) und die Vertiefung (74) fest verbunden sind.

6. Scheibenventil (30) nach Anspruch 5, wobei das Einführelement (72) und die Vertiefung (74) eine Presspassung ausbilden.

7. Scheibenventil (30) nach Anspruch 5 oder 6, wobei das Einführelement (72) und die Vertiefung (74) zusammengeschweißt sind.

8. Scheibenventil (30; 130; 230) nach einem der vorhergehenden Ansprüche, wobei der Scheibenstapel (38) zusätzlich eine Eingriffsscheibe (36) umfasst, die eine Dicke t aufweist und mit einer der zwei Ventilscheiben (32, 34) verbunden ist, wobei das Ventilbetätigungselement (62) mit der Eingriffsscheibe (36) in Eingriff steht.

9. Scheibenventil (230) nach Anspruch 8, wobei die Toleranzausgleichshöhe h durch Variieren der Dicke t der Eingriffsscheibe (36) bereitgestellt wird.

10. Scheibenventil (130) nach Anspruch 8, wobei die Toleranzausgleichshöhe h durch mindestens einen Vorsprung (80), der an der Eingriffsschreibe (36) ausgebildet ist und sich über die Dicke t der Eingriffsscheibe (36) hinaus erstreckt, bereitgestellt wird.

11. Scheibenventil (230) nach einem der Ansprüche 1, 8 oder 10, wobei die Toleranzausgleichshöhe h durch Variieren der Höhe g des Aufnahmeelements (64) bereitgestellt wird.

12. Wasserarmatur (10) zum Abgeben von Wasser, umfassend:
a) einen Armaturenkörper (16);
b) einen Warmwassereinlass und/oder einen Kaltwassereinlass (14) zum Einlassen von Wasser in die Wasserarmatur (10);
c) einen Wasserauslass (12) zum Abgeben von Wasser aus der Wasserarmatur (10);
d) ein Scheibenventil (30; 130; 230) nach einem der vorhergehenden Ansprüche zum Steuern der Wasserdosierung und/oder der Wassertemperatur des abgegebenen Wassers.

13. Verfahren zum Ausgleichen von Fertigungstoleranzen in einem Scheibenventil (30; 130; 230) mit den folgenden Schritten:
a) Anordnen eines Scheibenstapels (38) in einem Scheibenventilgehäuse (40), wobei das Scheibenventilgehäuse (40) eine Grundoberfläche b aufweist und wobei der Scheibenstapel (38) zwei Ventilscheiben (32, 34) umfasst, die als Ventilmittel zueinander bewegbar sind;
b) Montieren eines Ventilbetätigungselements (62) in einem Aufnahmeelement (64), wobei das Aufnahmeelement (64) eine Höhe g aufweist und derart eingerichtet ist, dass ein Schwenkpunkt (68) bereitgestellt wird, um den das Ventilbetätigungselement schwenkbar ist;
c) Anordnen des montierten Ventilbetätigungselements (62) und des Aufnahmeelements (64) auf dem Scheibenstapel (38) derart, dass das Ventilbetätigungselement (62) mit dem Scheibenstapel (38) in Eingriff steht, mittels dessen eine der zwei Ventilscheiben (32, 34) bewegbar ist;
d) Vorsehen einer Toleranzausgleichshöhe h im Wesentlichen innerhalb des Scheibenventilgehäuses (40) derart, dass ein vorbestimmter Abstand d zwischen dem Schwenkpunkt (68) und der Grundoberfläche b unabhängig von Fertigungstoleranzen bereitgestellt wird.

14. Verfahren nach Anspruch 13, wobei die Toleranzausgleichshöhe h durch Anordnen eines Toleranzausgleichselements (70) im Wesentlichen in dem Scheibenventilgehäuse (40) bereitgestellt wird.

15. Verfahren nach Anspruch 14, wobei die Toleranzausgleichshöhe h durch Einführen eines Einführelements (72), das an dem Toleranzausgleichselement (70) ausgebildet ist, in eine Vertiefung (74), die an dem Scheibenstapel (38) oder dem Aufnahmeelement (64) ausgebildet ist, mit variablen Einführtiefen i bereitgestellt wird.

## Revendications

1. Vanne à disque (30; 130; 230) pour le dosage de l'eau et/ou la température de l'eau d'un robinet d'eau (10) comprenant:
e) un corps de vanne à disque (40) comportant une surface de base b;
f) une pile de disques (38) agencée dans le corps de vanne à disque (40), dans lequel la pile de disques (38) comporte deux disques de vanne (32, 34) déplaçables l'un par rapport à l'autre en tant que moyens de vanne;
g) un élément d'actionnement de la vanne (62) en prise avec la pile de disques (38) par l'intermédiaire duquel un des deux disques de vanne (32, 34) peut être déplacé,
h) un élément de réception (64) présentant une hauteur g et étant conçu pour recevoir l'élément d'actionnement de la vanne (62) de manière à fournir un point de pivotement (68) autour duquel l'élément d'actionnement de la vanne (62) peut pivoter,
**caractérisé en ce**
**qu'**une distance prédéterminée d est fournie entre le point de pivotement (68) et la surface de base b indépendamment des tolérances de fabrication en réglant une hauteur de compensation de tolérance h fournie dans le corps de vanne à disque (40).

2. Vanne à disque (30) selon la revendication 1, dans lequel la hauteur de compensation de tolérance h est fournie par un élément de compensation de tolérance (70).

3. Vanne à disque (30) selon la revendication 2, dans lequel un évidement (74) est formé dans la pile de disques (38) ou l'élément de réception (64) et un élément d'insertion (72) est formé sur l'élément de compensation de tolérance (70), dans lequel l'élément d'insertion (72) est inséré dans l'évidement (74) pour fournir la hauteur de compensation de tolérance h.

4. Vanne à disque (30) selon la revendication 3, dans lequel l'élément d'insertion (72) est insérable dans l'évidement (74) avec des profondeurs d'insertion variables i pour varier la hauteur de compensation de tolérance h fournie par l'élément de compensation de tolérance (70).

5. Vanne à disque (30) selon l'une quelconque des revendications 3 ou 4, dans lequel l'élément d'insertion (72) et l'évidement (74) sont solidement reliés.

6. Vanne à disque (30) selon la revendication 5, dans lequel l'élément d'insertion (72) et l'évidement (74) forment un ajustage serré.

7. Vanne à disque (30) selon l'une quelconque des revendications 5 ou 6, dans lequel l'élément d'insertion (72) et l'évidement (74) sont soudés ensemble.

8. Vanne à disque (30; 130; 230) selon l'une quelconque des revendications précédentes, dans lequel la pile de disques (38) comporte en outre un disque d'engagement (36) ayant une épaisseur t reliée à l'un des deux disques de vanne (32, 34), dans lequel l'élément d'actionnement de la vanne (62) est en prise avec le disque d'engagement (36).

9. Vanne à disque (230) selon la revendication 8, dans lequel la hauteur de compensation de tolérance h est fournie en faisant varier l'épaisseur t du disque d'engagement (36).

10. Vanne à disque (130) selon la revendication 8, dans lequel la hauteur de compensation de tolérance h est fournie par au moins une saillie (80) formée sur le disque d'engagement (36) s'étendant au-delà de l'épaisseur t du disque d'engagement (36).

11. Vanne à disque (230) selon l'une quelconque des revendications 1, 8 ou 10, dans lequel la hauteur de compensation de tolérance h est fournie en faisant varier la hauteur g de l'élément de réception (64).

12. Robinet d'eau (10) destiné à distribuer de l'eau, comprenant.
a) un corps de robinet (10);
b) une entrée d'eau chaude et/ou une entrée d'eau froide (14) pour introduire de l'eau dans le robinet d'eau (10);
c) une sortie d'eau (12) pour distribuer de l'eau du robinet d'eau (10);
d) un vanne à disque (30; 130; 230) selon l'une quelconque des revendications précédentes pour contrôler le dosage d'eau et/ou la température de l'eau distribuée.

13. Procédé de compensation des tolérances de fabrication dans une vanne à disque (30; 130; 230) comportant les étapes suivantes:
a) agencement d'une pile de disques (38) dans un corps de vanne à disque (40), dans lequel le corps de vanne à disque (40) comporte une surface de base b et dans lequel la pile de disques (38) comporte deux disques de vanne (32, 34) déplaçables l'un par rapport à l'autre en tant que moyens de vanne;
b) assemblage d'un élément d'actionnement de la vanne (62) dans un élément de réception (64), dans lequel l'élément de réception (64) a une hauteur g et est conçu de manière à fournir un point de pivotement (68) autour duquel l'élément d'actionnement de la vanne (62) peut pivoter;
c) agencement de l'élément d'actionnement de la vanne (62) assemblé et l'élément de réception (64) sur la pile de disques (38) de telle sorte que l'élément d'actionnement de la vanne (62) est en prise avec la pile de disques (38) par l'intermédiaire duquel un des deux disques de vanne (32, 34) peut être déplacé;
d) fourniture d'une hauteur de compensation de tolérance h sensiblement à l'intérieur du corps de vanne à disque (40) de telle sorte qu'une distance prédéterminée d est fournie entre le point de pivotement (68) et la surface de base b indépendamment des tolérances de fabrication.

14. Procédé selon la revendication 13, dans lequel la hauteur de compensation de tolérance h est fournie en disposant un élément de compensation de tolérance (70) sensiblement à l'intérieur du corps de vanne à disque (40).

15. Procédé selon la revendication 14, dans lequel la hauteur de compensation de tolérance h est fournie en insérant un élément d'insertion (72) formé sur l'élément de compensation de tolérance (70) dans un évidement (74) formé dans la pile de disques (38) ou l'élément de réception (64) avec des profondeurs d'insertion variables i.
